Europäisches Patentamt

European Patent Office

Office européen des brevets

(11) Publication number: **0 398 622 A2**

# EUROPEAN PATENT APPLICATION

(21) Application number: **90305191.0**

(22) Date of filing: **15.05.90**

(51) Int. Cl.5: **G11B 7/135**

(30) Priority: **17.05.89 JP 123267/89**

(43) Date of publication of application:
**22.11.90 Bulletin 90/47**

(84) Designated Contracting States:
**DE FR GB IT**

(71) Applicant: **NIKON CORPORATION**
**2-3, Marunouchi 3-chome Chiyoda-ku**
**Tokyo(JP)**

(72) Inventor: **Ishii, Yuwa**
**9-4-304 Shinsaku 5-chome, Takatsu-ku**
**Kawasaki-shi, Kanagawa-ken(JP)**
Inventor: **Manabe, Yuji**
**902-20 Fueda**
**Kamakura-shi, Kanagawa-ken(JP)**

(74) Representative: **Burke, Steven David et al**
**R.G.C. Jenkins & Co. 26 Caxton Street**
**London SW1H 0RJ(GB)**

(54) Optical head in an optical disk apparatus.

(57) An optical head in an optical disk apparatus includes a collimator optical system for making a light beam from a light source into parallel beam, an objective optical system for condensing the parallel beam and applying it as a beam spot to a recording medium, and at least one branch-off means disposed between the collimator optical system and the objective optical system and provided with an even number of reflecting surfaces transmitting therethrough the parallel beam from the collimator optical system and reflecting the reflected light from the beam spot.

FIG. 4

## Optical Head In An Optical Disk Apparatus

### BACKGROUND OF THE INVENTION

#### Field of the Invention

This invention relates to an optical head for use in an apparatus wherein a light beam is applied to a disk-like medium in an optical disk apparatus or a magneto-optical disk apparatus to thereby effect recording, reproduction and erasing (hereinafter simply referred to as the optical disk apparatus).

#### Related Background Art

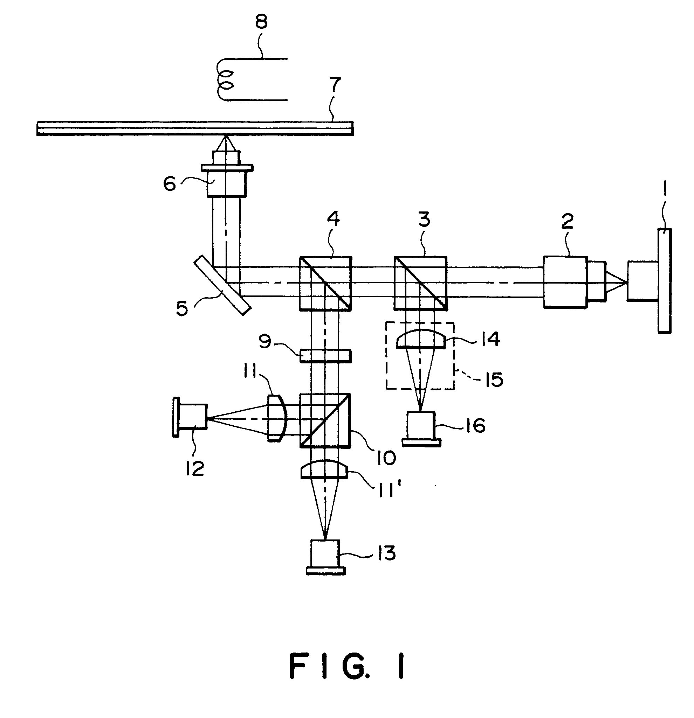

As optical head of a conventional apparatus of this type, there is an optical head for a magneto-optical disk as shown, for example, in Figure 1 of the accompanying drawings.

In Figure 1, the reference numeral 1 designates a semiconductor laser which is a light source, and the laser light from the semiconductor laser 1 is made into a parallel light beam by a collimator lens 2. Most of the parallel light beam is transmitted through the beam splitter 3 of a servo optical system and the beam splitter 4 of a main optical system, and thereafter is deflected by a galvano mirror 5 and enters an objective lens 6.

The parallel beam which has entered the objective lens 6 is condensed by the objective lens 6, and the condensed light beam forms a light spot of a diameter of about 1 μm on the medium surface (the vertically magnetized film) of a disk 7 which is a recording medium.

During the recording of information, vertical magnetic recording is effected on the medium surface of the disk 7 by heat energy provided by the light spot and the energy of the outside magnetic field produced by a coil 8. Also, during the reproduction of information, the reflected light of the light spot is received by light receiving elements 12 and 13 through the objective lens 6, the galvano mirror 5, the beam splitter 4 of the main optical system, a half wavelength plate 9, a polarizing beam splitter 10 and imaging lenses 11 and 11', and the Kerr rotation of the reflected light is detected from the differential output of the light receiving elements 12 and 13 to thereby reproduce the information. The main optical system is constituted by the beam splitter 4, the half wavelength plate 9, the polarizing beam splitter 10 and the imaging lenses 11 and 11'.

In Figure 1, the reference numeral 16 denotes a light receiving element for receiving the reflected light from the beam splitter 3 of the servo optical system through an imaging optical system 15 having an imaging lens 14 for auto focusing and auto tracking, i.e. a sensor for servo.

The servo optical system is constituted by the beam splitter 3 and the imaging optical system 15.

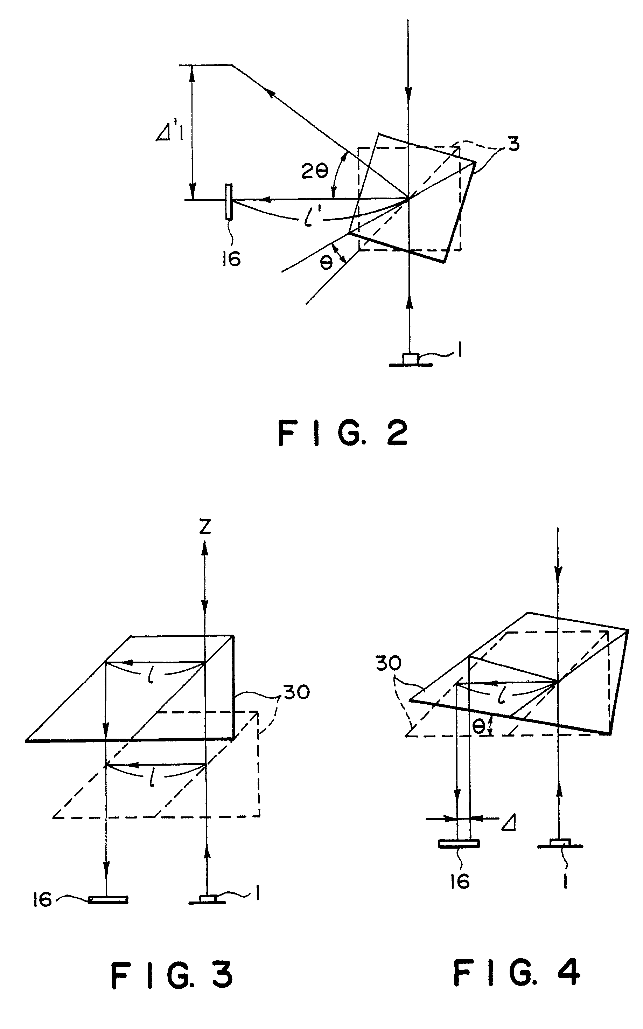

The beam splitter 3 or 4 used in the conventional optical head constructed as described above has a reflecting surface as shown in Figure 2 of the accompanying drawings.

In such a beam splitter, when for example, the beam splitter 3 is inclined by $\theta$, the optic axis of a light beam passing through an imaging optical system, not shown, to the sensor 16 for servo is inclined by $2\theta$.

Assuming that there is no imaging lens in the imaging optical system and that the distance from the beam splitter 3 to the sensor 16 for servo is $\ell'$, the amount of movement $\Delta'1$ of the optic axis on the sensor 16 for servo is
$$\Delta'1 = 2\ell'\theta.$$

Also if there is an imaging lens in the imaging optical system, the optic axis is inclined and therefore, the light beam moves on the light receiving surface of the sensor 16 for servo. Assuming that the amount of movement is $\Delta'2$,
$$\Delta'2 \approx 2f\theta,$$
where f is the focal length of the imaging lens.

In the prior art as described above, the optical head of the optical disk apparatus effects focusing servo and tracking servo to accurately record, reproduce and erase information on the tracks of the disk-like recording medium, and high accuracy is required of all these operations. It has therefore been necessary to minimize the error of the applied position of the light beam on the surface of the light receiving element.

Therefore, when for example, the beam splitter 3 of the servo optical system is to be mounted and fixed at a predetermined position, an adhesive agent is used and the work is done with considerable care paid to the positional relation thereof, but the work of course involves a high degree of difficulty, as well as expansion or contraction because of a temperature change or a variation with time after the fixing.

As a result, some deviation occurs to the angle of mounting and the mounted position of the beam splitter 3 of the servo optical system and thus, the servo light reflected thereby shifts and turns and the applied position thereof to the sensor 16 for servo moves.

Even if this amount of movement caused by a temperature change or the like is slight, it greatly influences the light receiving surface of the minute sensor (usually comprised of a light receiving ele-

2

ment having a size of the order of several tens of μm) and thus, offset or cross talk strain is created in a servo signal taken out as an electrical signal, and this has led to a problem that accurate servo cannot be accomplished.

## SUMMARY OF THE INVENTION

It is the object of the present invention to provide an optical head in an optical disk apparatus which will not be affected in accuracy even if some displacement occurs to a beam splitter such as the beam splitter of a servo optical system or the beam splitter of a main optical system.

To achieve the above object, the present invention proposes, as means for solving problems in an optical disk apparatus wherein a light beam from a light source is made into a parallel beam by a collimator optical system and the parallel beam is applied as a beam spot to a disk-like recording medium by an objective optical system to thereby effect the recording and reproduction of information, the provision of at least one branch-off means disposed between the collimator optical system for making the light beam from said light source into a parallel light beam and said objective optical system and provided with an even number of reflecting surfaces.

In the present invention, in order that a beam spot condensed by the objective optical system may be applied to the disk-like recording medium and part of the reflected light thereof may be caused to branch off, a beam splitter for reflecting the light beam an even number of times by reflecting surfaces parallel or orthogonal to each other is disposed in the optical path of the optical head and therefore, even if some displacement occurs to said beam splitter, there is not the inconvenience as is peculiar to the prior art that the applied position of the beam on the light receiving surface is greatly displaced and offset or cross talk strain or the like occurs.

The principle of its will hereinafter be described with reference to Figures 3 and 4 of the accompanying drawings.

Figure 3 shows a state in which the beam splitter has been displaced in the direction of the optic axis (the Z direction) and a direction orthogonal to the optic axis. A light emitted from a light source is transmitted through the beam splitter 30, is made into a spot light through an optical system, not shown, and is applied to a recording medium. The reflected light from the recording medium again enters the beam splitter 30 through said optical system. Since even when the beam splitter 30 is displaced in the direction of the optic axis and a direction orthogonal to the optic axis, the two reflecting surfaces thereof are provided so as to be parallel to each other, the applied position of the light beam which has again entered the beam splitter 30 and enters a light receiving element 16 does not change.

Figure 4 shows a state in which the beam splitter is inclined by an angle $\theta$ ($\theta \ll 1$).

As shown, the light beam which enters the light receiving element 16 effects parallel movement as compared with the time before it rotates. Assuming that the amount of movement thereof is $\Delta$,

$\Delta \simeq \ell\, \theta/n$,

where n is the refractive index of the material of the optical part. In Figure 4, the bending of the optical path caused by the light obliquely entering the beam splitter is not shown.

However, on the light receiving element, the light receiving position changes by $\Delta$.

However, as in the example shown above, the light beam effects parallel movement and the amount of movement thereof is small. Also, in the construction of the optical head of the present apparatus in which an imaging lens is provided for focusing, any change does not occur in the light receiving position for the light beam on the light receiving surface.

## BRIEF DESCRIPTION OF THE DRAWINGS

Figure 1 shows the entire construction of an example of the prior art.

Figure 2 illustrates a beam splitter used in the example of the prior art.

Figures 3 and 4 illustrate the principle of a beam splitter having the two parallel reflecting surfaces of the present invention.

Figure 5 shows a first embodiment of the present invention.

Figure 6 shows a second embodiment using a beam splitter having the two orthogonal reflecting surfaces of the present invention.

## DESCRIPTION OF THE PREFERRED EMBODIMENTS

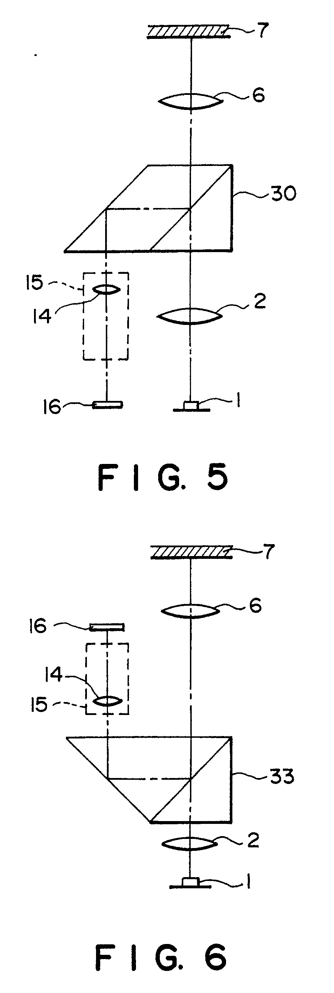

Figure 5 shows a first embodiment of the present invention.

It shows an embodiment in which the beam splitter of the present invention is used, for example, in a servo optical system.

A light from a light source 1 is made into a parallel light beam by a collimator lens 2. Most of the parallel light beam is transmitted through the beam splitter 30 of a servo optical system and the beam splitter of a main optical system, not shown, is deflected by a galvano mirror, not shown, and enters an objective lens 6. The parallel beam which has entered the objective lens 6 is condensed by the objective lens 6, and the condensed light beam forms a light spot on a disk 7 which is a recording medium.

The reflected light of the light spot again passes through said optical systems and enters the beam splitter 30 of the servo optical system to effect focusing servo and tracking servo. The light beam which has entered the beam splitter 30 of the servo optical system is reflected by two reflecting surfaces provided parallel to each other and passes through an imaging optical system 15, and is imaged on the light receiving surface of a sensor 16 for servo by an imaging lens 14 in the imaging optical system 15.

As described above, the light beam is reflected by the two reflecting surfaces of the beam splitter 30 which are provided parallel to each other, and thereafter is imaged by the imaging lens 14 and therefore, the light beam is received at the same position on the light receiving surface of the sensor 16 for servo without being affected by the displacement or inclination of the beam splitter 30.

Figure 6 shows a second embodiment of the present invention.

Instead of the beam splitter 30 having the two parallel reflecting surfaces disposed in the first embodiment, there is disposed a beam splitter 33 having two reflecting surfaces orthogonal to each other, and a light beam may be reflected by the reflecting surfaces so that the light beam may be imaged on the light receiving surface of a sensor 16 for servo by an imaging lens 14 in an imaging optical system 15. The light receiving effect for the reflected light of the light spot is similar to that in the first embodiments.

In the embodiments of the present invention, the substance of carrying out the invention has been described with respect to the servo optical system, whereas this is not restrictive, but of course, the present invention can also be carried out in the main optical system (the optical system for information reproduction).

The present invention is not limited by the difference in the kind of the optical head, i.e., the difference as between a magneto-optical head and a write once head.

As described above, according to the present invention, an even number of reflecting surfaces are provided in a beam splitter and therefore, no hindrance will be brought about in the detection of the reflected light even if some displacement and inclination occur to the beam splitter, and this leads to not only the advantage that the adjusting work for high accuracy becomes easy, but also the advantage that the occurrence of an accident resulting from the displacement and inclination of the baem splitter caused thereafter by some external factors is eliminated.

Also, the method of fixing the beam splitter may be the fixing method which is usually practised, and it becomes unnecessary to employ such a special treatment that no displacement will be caused.

## Claims

1. An optical head in an optical disk apparatus including:
a collimator optical system for making a light beam from a light source into a parallel beam;
an objective optical system for condensing said parallel beam and applying it as a beam spot to a recording medium; and
at least one branch-off means disposed between said collimator optical system and said objective optical system and provided with an even number of reflecting surfaces transmitting therethrough the parallel beam from said collimator optical system and reflecting the reflected light from said beam spot.

2. An optical head according to Claim 1, wherein the even number of reflecting surfaces of said branch-off means are parallel or perpendicular to each other.

3. An optical head according to Claim 1, further including an imaging optical system for condensing the reflected light caused to branch off by said branch-off means.

4. An optical head according to Claim 1, wherein said even number of reflecting surfaces of said branch-off means are integrally provide on one and the same optical member.

5. An optical head according to Claim 4, further including photoelectric converting means for controlling said optical head, said photoelectric converting means being disposed so as to receive at least a part of the reflected light caused to branch off through said branch-off means

6. An optical head for a recording and/or reproduction apparatus, the head comprising means for transmitting an optical beam through a beam splitter to a recording medium, the beam splitter being arranged to receive light reflected from the medium and to reflect such light to a sensing means, characterized in that the optical path from the beam splitter to the sensing means comprises an even number of reflecting surfaces.

# F I G. I

F I G. 2

F I G. 3

F I G. 4

F I G. 5

F I G. 6